# EUROPÄISCHE PATENTANMELDUNG

(11) **EP 1 249 686 A2**
(43) Veröffentlichungstag der Anmeldung: **16.10.2002**
(21) Anmeldenummer: 02100369.4
(22) Anmeldetag: 12.04.2002
(51) Int. Cl.: G01D 5/16, G01B 7/30

(54) **Winkelsensor sowie Verfahren zum Erhöhen der Anisotropiefeldstärke einer Sensoreinheit eines Winkelsensors**

(30) Priorität: 14.04.2001 DE 10118650
(71) Anmelder: Philips Corporate Intellectual Property GmbH, 20099 Hamburg (DE); Koninklijke Philips Electronics N.V., 5621 BA Eindhoven (NL)
(72) Erfinder: Döscher, Michael, 52066, Aachen (DE)
(74) Vertreter: Volmer, Georg, Dipl.-Ing.

(57) **Zusammenfassung**

Die Erfindung befrifft einen Winkelsensor mit mindestens zwei winkelversetzt zueinander angeordneten anisotropen magnetoresistiven Sensoreinheiten, die anisotrope magnetoresistive Elemente umfassen, wobei der Winkelsensor mindestens eine Vorrichtung zur Erhöhung der Anisotropiefeldstärke der Sensoreinheiten umfaßt. Die Erfindung betrifft ferner ein Verfahren zum Erhöhen der Anisotropiefeldstärke einer Sensoreinheit eines Winkelsensors, die magnetoresistive Elemente umfaßt, wobei ein in einer Vorzugsrichtung der magnetoresistiven Elemente anliegendes magnetisches Stützfeld erzeugt wird.

## Beschreibung

Die Erfindung betrifft einen Winkelsensor mit mindestens zwei winkelversetzt zueinander angeordneten anisotropen magnetoresistiven Sensoreinheiten (AMR-Sensoreinheit), die anisotrope magnetoresistive Elemente (AMR-Elemente) umfassen. Solche AMR-Sensoren zur Winkelmessung werden in unterschiedlichen Anwendungsgebieten eingesetzt, wobei ein häufiges Anwendungsgebiet der Automobilbau ist, bei dem solche Sensoren beispielsweise als Drosselklappen-Winkelsensoren in Verbrennungsmotoren oder zur Lenkwinkelerkennung eingesetzt werden.

Ein solcher Winkelsensor ist aus der deutschen Offenlegungsschrift DE 44 08 078 A1 bekannt.

Werden solche Winkelsensoren in einem Magnetfeld betrieben, welches deutlich stärker ist als seine Anisotropiefeldstärke, was der typische Einsatzbereich der bekannten AMR-Winkelsensoren ist, wird der Sensor in der Sättigung betrieben, wodurch er eine Kennlinie erzeugt, die sin(2α)-periodisch verläuft.

Die sin(2α)-periodische Kennlinie führt dazu, dass der Winkelsensor lediglich Winkelmessungen über einen Bereich von 180° durchführen kann, da aufgrund der Periodizität zwischen 0° und 180° nicht unterschieden werden kann.

Für eine Winkelmessung über einen Winkelbereich von 360° bei höheren Feldstärken sind daher komplexere Sensoren, wie z. B. GMR-Sensoren (Giant Magnetoresistive Sensors) oder technologische Systeme mit mehreren Sensoren und Zahnrädern erforderlich, was entweder zu einer hochkomplexen Fertigung und einer damit verbundenen Erhöhung der Kosten führt, oder dazu führt, dass die Winkelsensoren nicht mehr berührungslos arbeiten können. Darüber hinaus ist die Langzeitstabilität der GMR-Sensoren derzeit noch unklar.

Es ist daher Aufgabe der vorliegenden Erfindung einen AMR-Winkelsensor zur Verfügung zu stellen, der einfach und kostengünstig herzustellen ist und einen Meßbereich von 360° auch bei hohen Feldstärken, wie sie insbesondere im Automobilbereich auftreten können, abdecken kann.

Diese Aufgabe wird durch einen Winkelsensor gemäß Anspruch 1 und einen Winkelsensor gemäß Anspruch 15 gelöst. Die Aufgabe wird ferner durch ein Verfahren nach Anspruch 16 und ein Verfahren nach Anspruch 21 gelöst. Die Ansprüche 2 bis 14 betreffen besonders vorteilhafte Ausführungsformen des erfindungsgemäßen Winkelsensors, die Ansprüche 17 bis 20 betreffen besonders vorteilhafte Ausgestaltungen des erfindungsgemäßen Verfahrens.

Gemäß der Erfindung umfaßt der Winkelsensor mindestens eine Vorrichtung zur Erhöhung der Anisotropiefeldstärke der in dem Winkelsensor eingesetzten Sensoreinheiten. Bei einem erfindungsgemäßen Winkelsensor wird die Tatsache genutzt, dass die Kennlinie eines AMR-Winkelsensors eine Periodizität von sin(α) aufweist, wenn der Sensor bei Feldstärken unterhalb der Anisotropiefeldstärke betrieben wird Bei einer solchen Periodizität ist auch eine Messung über 360° möglich.

Durch einen Winkelsensor mit einer Vorrichtung zur Erhöhung der Anisotropiefeldstärke der Sensoreinheiten kann die Anisotropiefeldstärke daher soweit erhöht werden, dass auch die insbesondere im Automobilbereich aber auch in anderen Bereichen auftretenden hohen Feldstärken unterhalb der Anisotropiefeldstärke des AMR-Winkelsensors liegen. Dadurch wird auf einfache und kostengünstige Weise ein AMR-Winkelsensor zur Verfügung gestellt, der auch bei sehr hohen Feldstärken eine Messung über 360° kostengünstig und berührungslos ermöglicht.

Die Vorrichtung zur Erhöhung der Anisotropiefeldstärke der Sensoreinheit prägt bei einer bevorzugten Ausführungsform ein in einer Vorzugsrichtung der magnetoresistiren Elemente anliegendes Stützfeld auf, das die Anisotropiefeldstärke der Sensoreinheiten bzw. der magnetoresistiven Elemente (MR-Elemente) erhöht.

Typische Feldstärken für ein in Vorzugsrichtung anliegendes Stützfeld liegen zwischen 1 und 10 kA/m bevorzugt zwischen 1 und 6 kA/m, wobei übliche Magnetfeldstärken bei circa 4 kA/m liegen. Die Meßfeldstärken, in denen der Winkelsensor eigesetzt wird, liegen in ähnlichen Größenordnungen, bevorzugt ist die Meßfeldstärke etwas geringer als die Feldstärke des Stützfeldes. Typische Meßfeldstärken liegen in einem Bereich von 3 kA/m, sind aber sehr von dem Einsatzgebiet abhängig. Bei einer bevorzugten Ausführungsform ist eine weichmagnetische Schirmung gegen externe Störfelder vorteilhaft.

Die MR-Elemente umfassen in der Regel parallel angeordnete MR-Streifen, die insbesondere in einer Vorzugsrichtung ausgerichtet sind, können aber auch anderweitig ausgebildet sein.

Gemäß einer bevorzugten Ausführungsform des erfindungsgemäßen Winkelsensors umfaßt die Vorrichtung zur Erhöhung der Anisotropiefeldstärke mindestens eine Spulenanordnung, wobei bevorzugt mindestens eine externe Spule je magnetoresistivem Element eingesetzt wird, die das MR-Element im wesentlichen vollständig umgibt, so dass im Kernbereich der Spule das Magnetfeld in Richtung der Vorzugsrichtung der MR-Elemente ausgerichtet ist.

Anstelle der oder auch zusätzlich zu den externen Spulen ist es bei einer anderen Ausführungsform jedoch auch möglich, mindestens eine im Layout jedes MR-Elements integrierte Dünnschichtspule vorzusehen.

Weitere Möglichkeiten, die Erhöhung der Anisotropiefeldstärke der Sensoreinheiten erfindungsgemäß zu erhöhen, bestehen beim Einsatz mindestens eines Magneten, dessen Magnetfeld in der Vorzugsrichtung der MR-Elemente ausgerichtet ist, wobei sowohl Permanentmagneten als auch Elektromagneten eingesetzt werden können. Permamentmagneten sind jedoch bevorzugt, da diese den Winkelsensor während des Einsatzes weniger beeinflussen.

Es soll an dieser Stelle angemerkt werden, dass die Vorrichtungen zur Erhöhung der Anisotropiefeldstärke der Sensoreinheiten sowohl Vorrichtungen sein können, die die Anisotropiefeldstärke permanent erhöhen, wie zB. der oben genannte Permanent- oder Dauermagnet, während von der Erfindung auch Vorrichtungen umfaßt werden, die die Anisotropiefeldstärke diskontinuierlich und gesteuert erhöhen können, wie es beispielsweise im Falle der oben genannten Spulenanordnungen oder im Falle des Elektromagneten möglich ist. Die Erhöhung der Anisotropiefeldstärke kann in diesem Fall sowohl zeitlich als auch in ihrem Ausmaß gesteuert werden, wobei bei zeitlichen Steuerungen sowohl eine periodische als auch eine nicht-periodische Erhöhung der Anisotropiefeldstärke von der Erfindung umfaßt werden.

Eine weitere Möglichkeit für die Vorrichtung zur Erhöhung der Anisotropiefeldstärke ist das Vorsehen einer hartmagnetischen Schicht, die auf die MR-Elemente aufgebracht wird. Bei dieser Vorrichtung handelt es sich um eine Vorrichtung, die die Anisotropiefeldstärke permanent erhöht.

Bei einer besonders bevorzugten Ausführungsform sind die mindestens zwei winkelversetzt zueinander angeordneten anisotropen magnetoresistiven Sensoreinheiten um einen Winkel von 90° verkippt, was eine Messung über einen Winkel von 360° ermöglicht. Es soll an dieser Stelle darauf hingewiesen werden, dass auch eine Verkippung beispielsweise um 45° möglich ist und dass der erfindungsgemäße Winkelsensor mit der Vorrichtung zur Erhöhung der Anisotropiefeldstärke der Sensoreinheiten je nach Anwendungsgebiet auch so ausgelegt sein kann, dass er lediglich einen reduzierten Winkelbereich, beispielsweise von 180° mißt. Der erfindungsgemäße Winkelsensor ist daher nicht auf einen 360° AMR-Winkelsensor eingeschränkt, obwohl dies sein bevorzugtes Anwendungsgebiet ist und wobei bei einer solchen Messung die Vorteile des erfindungsgemäßen Winkelsensors besonders zum Tragen kommen.

Die in den Sensoreinheiten vorgesehenen MR-Elemente umfassen bevorzugt MR-Schichten, insbesondere MR-Streifen mit einer vorgegebenen Länge (l), Breite (b) und Dicke (d). Um eine Erhöhung der Anisotropiefeldstärke weiter zu unterstützen, ist es besonders vorteilhaft, das Verhältnis von Dicke (d) zu Breite (b) möglichst groß zu halten, wobei insbesondere Verhältnisse V=d/b bevorzugt sind, die Werte von 4*10⁻³ überschreiten, insbesondere ein Verhältnis V≥ 1,5*10⁻² aufweisen.
Ferner ist es bevorzugt, dass zumindest einige der MR-Schichten rechteckig, hyperbolisch und/oder asteroid ausgebildet sind, wodurch ebenfalls eine Erhöhung der Anisotropiefeldstärke des Sensorelementes erzielt wird.

Ferner ist es bevorzugt, dass die MR-Schichten aus einem Material mit hoher intrinsischer Materialanisotropie bestehen. Als bevorzugte Materialien eignen sich hier insbesondere NiCo 50:50 (H_{K}=2500), NiCo 70:30 (H_{K}=2500), CoFeB 72:8:20 (H_{K} = 2000), NiFe 81:19 (H_{K}=250), wobei H_{K} die intrinsische Materialanisotropie ist.

Die Wahl des Verhältnisses zwischen Dicke und Breite der MR-Schichten sowie die Wahl der geometrischen Form der MR-Schichten und des Materials der MR-Schichten verstärken den Effekt der oben beschriebenen Vorrichtungen zur Erhöhung der Anisotropiefeldstärke der Sensoreinheiten, sie erhöhen die Anisotropiefeldstärke der Sensoreinheiten jedoch auch unabhängig von den oben erläuterten Vorrichtungen und sind daher als eigenständig erfinderische Aspekte anzusehen.

Gemäß einem weiteren eigenständig erfinderischen Aspekt umfaßt der Winkelsensor ferner Mittel zum Applizieren von Ummagnetisierungspulsen, wobei diese Mittel bevorzugt mindestens eine Spulenanordnung umfassen. Als Spulenanordnung eignen sich auch die oben beschriebenen externen Spulen oder die internen, im Layout der MR-Elemente integrierten Dünnschichtspulen.

Die Ummagnetisierungspulse werden zumindest an bestimmten Punkten kontrolliert herbeigeführt, wobei ein "Flippen" der Kennlinie ausgeglichen wird, das dann auftritt, wenn der Winkelsensor in Feldstärken im Bereich der Anisotropiefeldstärke eingesetzt wird, wobei sich der Winkelsensor in einem Grenzbereich bewegt, in dem er Kennlinien mit einer sin(2α) und Kennlinien mit einer sin(α) Periodizität erzeugt, was zu spontanen Ummagnetisierungen im MR-Sensorelement führt.

Der erfindungsgemäße Winkelsensor ermöglicht daher eine 360° Winkeldetektion entweder dadurch, dass die Anisotropiefeldstärke soweit erhöht wird, dass die Feldstärke, in der der Sensor eingesetzt wird, deutlich unter der Anisotropiefeldstärke des Sensors liegt, wodurch eine Kennlinie mit einer sin(α) Periodizität erzeugt wird, oder aber dadurch, dass die im Grenzbereich zwischen der sin(2α) und der sin(α) Periodizität auftretende spontane Ummagnetisierung (Flippen der Kennlinie) durch Ummagnetisierungspulse klar definiert wird, so dass nach Signalauswertung ein 360°-Signal erhalten wird.

Beide Maßnahmen können je nach Anwendungsgebiet sowohl gemeinsam als auch isoliert voneinander eingesetzt werden.

Ferner umfaßt der Winkelsensor bei einer weiteren Ausführungsform nachgeschaltete oder integrierte Signalelektronik, die eine nachträglich Korrektur der Ausgangssignale erzeugt, insbesondere eine Korrektur, die aufgrund des oben erläuterten "Flippens" der Kennlinie erforderlich wird, so dass auch in diesem Fall ein 360°-Signal erhalten wird, auch wenn die Mittel zum Applizieren von Ummagnetisierungspulsen nicht vorgesehen sind und die Anisotropiefeldstärke der Sensoreinheit nicht deutlich oberhalb der Feldstärke liegt, in der der Winkelsensor eingesetzt wird, so dass auch diese Signalelektronik einen an sich eigenständig erfinderischen Aspekt betrifft.

Die Erfindung betrifft ferner ein Verfahren zum Erhöhen der Anisotropiefeldstärke einer Sensoreinheit eines Winkelsensors, die magnetoresistive Elemente mit einer Vorzugsrichtung umfaßt, wobei gemäß dem erfindungsgemäßen Verfahren ein in Vorzugsrichtung anliegendes magnetisches Stützfeld erzeugt wird Dadurch kann auf einfache Weise ein AMR-Winkelsensor zur Verfügung gestellt werden, der auch bei hohen Feldstärken eine 360°-Messung ermöglicht. Diese und weitere Vorteile entsprechen den Vorteilen, die im Zusammenhang mit dem erfindungsgemäßen Winkelsensor erläutert worden sind

Das Stützfeld kann sowohl permanent als auch diskontinuierlich angelegt werden, wobei zur Erzeugung des Stützfeldes die oben genannten Vorrichtungen und Methoden eingesetzt werden können. Insbesondere ist es bevorzugt, dass das Stützfeld mittels einer Spulenanordnung oder eines Magneten erzeugt wird, ferner ist es möglich, das Stützfeld durch eine hartmagnetische Schicht zu erzeugen, die auf oder neben den MR-Elementen aufgebracht ist.

Diese und weitere Vorteile und Eigenschaften des erfindungsgemäßen Winkelsensors und des erfindungsgemäßen Verfahrens werden anhand der nachfolgenden schematischen Zeichnungen noch näher erläutert. Es zeigen:
- Fig. 1: einen prinzipiellen Aufbau einer Ausführungsform eines erfindungsgemäßen Winkelsensors;
- Fig. 2: ein Beispiel für eine Realisierung eines Sensors, dessen prinzipieller Aufbau in Fig. 1 gezeigt ist;
- Fig. 3a: eine Draufsicht auf eine Ausführungsform eines MR-Elements mit MR-Streifen und einer externe Spule gemäß der Erfindung;
- Fig. 3b: eine Seitenansicht auf das in Fig. 3a gezeigte MR-Element;
- Fig. 4a: eine Draufsicht auf eine Ausführungsform eines MR-Elements mit internen Spulen gemäß der Erfindung;
- Fig. 4b: eine vergrößerte Ansicht des in Fig. 4a mit b gekennzeichneten Bereichs;
- Fig. 5a: eine Draufsicht auf eine Ausführungsform eines MR-Elements mit einem externen Magneten gemäß der Erfindung;
- Fig. 5b: eine Seitenansicht der in Fig. 5a gezeigten Ausführungsform des MR-Elements;
- Fig. 6a: eine Draufsicht auf eine Ausführungsform eines MR-Elements mit einer hartmagnetischen Schicht gemäß der Erfindung;
- Fig. 6b: eine Seitenansicht des in Fig. 6a gezeigten MR-Elements;
- Fig. 7a, b, c,: mögliche geometrische Formen von MR-Streifen gemäß der Erfindung.

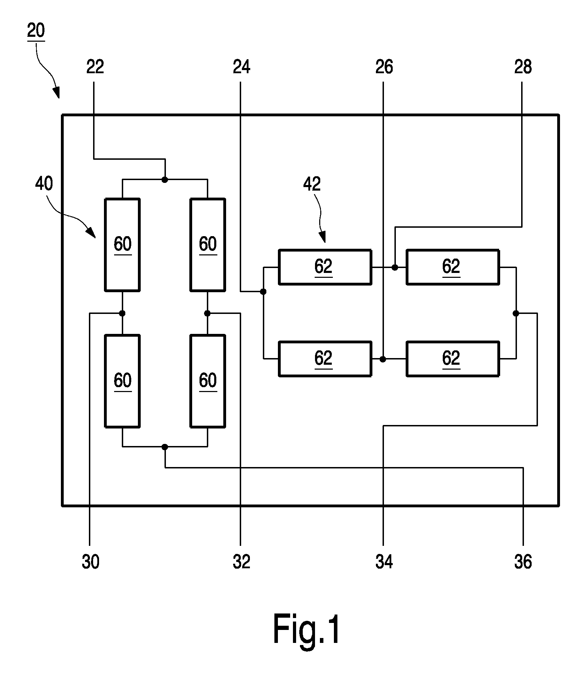

Fig. 1 zeigt schematisch einen prinzipiellen Aufbau eines 360° AMR-Sensors 20 als eine mögliche Ausführungsform eines erfindungsgemäßen Sensors. Der Sensor umfaßt zwei galvanisch voneinander getrennte Sensoreinheiten 40, 42, von denen eine parallel zu den Chipkanten ausgerichtet ist (cos-Brücke), und eine andere unter 90° dazu angeordnet ist (sin-Brücke).

Die Brücken bzw. Sensoreinheiten 40, 42 umfassen jeweils vier anisotrope magnetoresistive Elemente (MR-Elemente) 60 bzw. 62.

Der Winkelsensor 20 weist Anschlüsse 22, 24, 26, 28, 30, 32, 34, 36 auf.

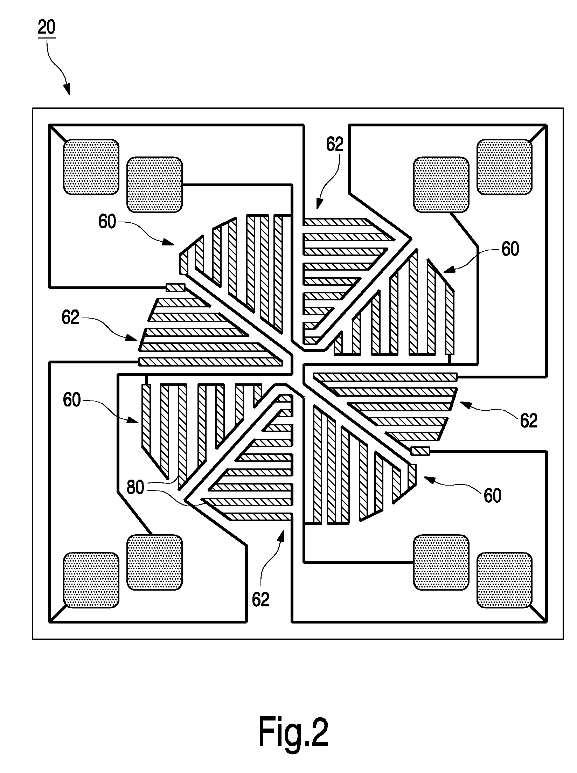

Ein mögliches Beispiel für die Realisierung eines in Fig. 1 gezeigten AMR-Sensors ist in Fig. 2 schematisch dargestellt. Der Winkelsensor 20 umfaßt die beiden in Fig. 1 gezeigten Sensoreinheiten (40, 42; siehe Fig. 1), wobei jede Sensoreinheit MR-Elemente 60 bzw. 62 aufweist.

Die MR-Elemente 60, 62 der beiden Sensoreinheiten umfassen anisotrop magnetoresistive Streifen (MR-Streifen) 80, die innerhalb eines jeden MR-Elementes 60, 62 immer parallel zueinander angeordnet sind

Bei der in Fig. 2 gezeigten Ausführungsform des Winkelsensors 20 sind Barber-Pole-Strukturen mit entgegengesetzter Neigung der Barber-Pole in schräg gegenüberliegenden Teilen der Widerstandsbrücken realisiert, der Sensor kann aber selbstverständlich auch ohne Barber-Pole gefertigt werden. Beide Sensoreinheiten bzw. Brücken sind um 90° gegeneinander verdreht und ineinander verschränkt.

Ausführungsformen von MR-Elementen gemäß der Erfindung, die in Winkelsensoren eingesetzt werden können, die in den Fig. 1 und 2 dargestellt sind, werden in Zusammenhang mit den nachfolgenden Abbildungen beschreiben werden.

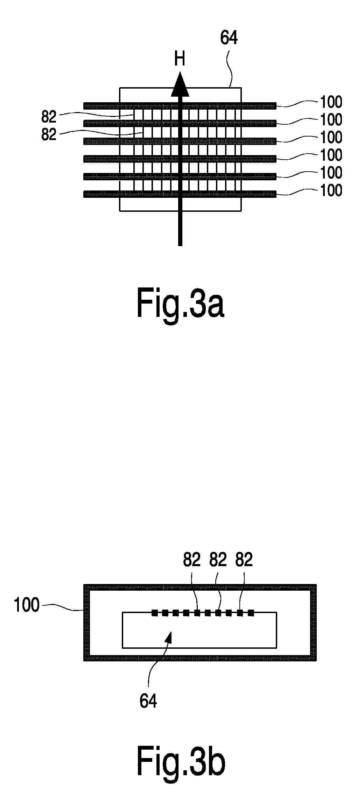

Fig. 3a zeigt schematisch eine Draufsicht auf ein MR-Element 64, das mit MR-Streifen 82 versehen ist. Als Vorrichtung zur Erhöhung der Anisotropiefeldstärke des MR-Elements ist bei dieser Ausführungsform eine Spule 100 vorgesehen, die das MR-Element 64 im wesentlichen vollständig umgibt.

Der Verlauf der Spule 100 ist insbesondere aus Fig. 3b ersichtlich, in der deutlich das MR-Element 64 im Querschnitt zu sehen ist, das eine Oberfläche aufweist, auf der die MR-Streifen 82 aufgebracht sind Die Spule 100 umgibt das MR-Element 64 unwesentlichen vollständig.

Gleichwohl der Spulenquerschnitt hier rechteckig dargestellt ist, kann der Spulenquerschnitt auch sämtliche beliebigen geometrischen Formen annehmen, beispielsweise auch einen kreisförmigen Querschnitt aufweisen.

Durch die Spule 100 wird im Kern ein im wesentlichen homogenes Magnetfeld erzeugt, das mit dem Pfeil H angedeutet ist. Das Magnetfeld ist im wesentlichen parallel zu der Längsausrichtung der MR-Streifen ausgerichtet, die der Vorzugsrichtung der MR-Streifen entspricht. Die MR-Streifen der in Fig. 3 gezeigten Ausführungsform weisen eine Dicke d von 120 nm und eine Breite b von 6 m auf, so dass ein Verhältnis V = d/b = 2·10⁻² realisiert wird

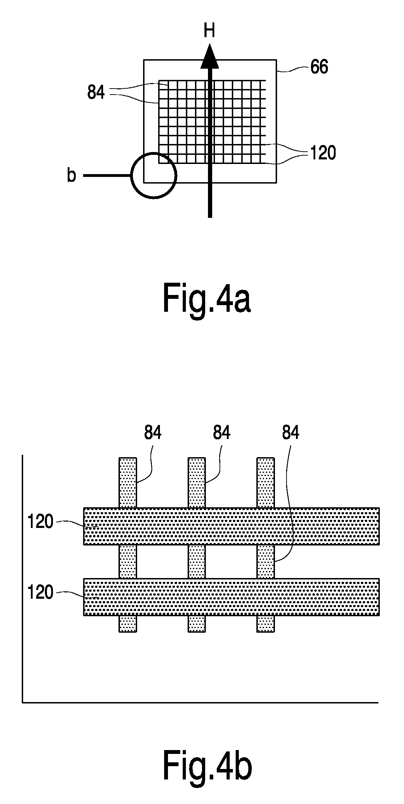

In Fig. 4 ist eine weitere Ausführungsform eines MR-Elements gemäß der Erfindung dargestellt. Fig. 4a zeigt eine Draufsicht auf ein MR-Element 66, das, wie das in Fig. 3a gezeigte Element, ebenfalls längliche MR-Streifen 84 aufweist.

Anstelle der das MR-Element umgebenden Spule sind bei dieser Ausführungsform interne Spulen 120 vorgesehen. Der Aufbau einer internen Spule 120 ist insbesondere in Fig. 4b ersichtlich, wobei das von der Spule bzw. den Spulen 120 erzeugte Magnetfeld H im wesentlichen dem Magnetfeld H entspricht, wie es auch bei der in Fig. 3 gezeigten Ausführungsform erzeugt wird

Bei den Spulen 120 handelt es sich um im Layout integrierte Dünnschichtspulen, wodurch die Abmessungen des MR-Elements mit den Spulen gegenüber den Abmessungen der in Fig. 3 gezeigten Ausführungsform deutlich verringert werden können. Die MR-Streifen der in Fig. 4 gezeigten Ausführungsform weisen eine Dicke d von 120 nm und eine Breite b von 6 µm auf, so dass ein Verhältnis V = d/b = 2·10⁻² realisiert wird.

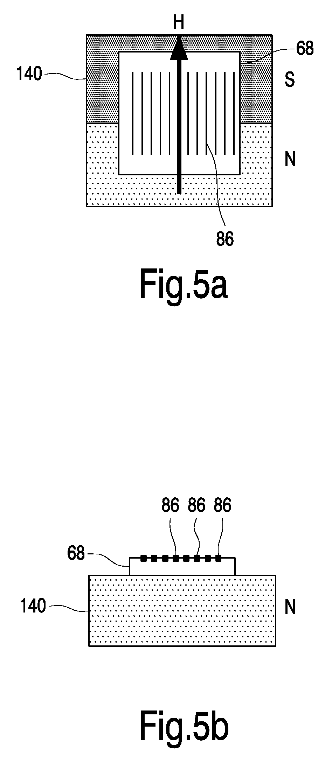

In Fig. 5 ist eine weitere Ausführungsform eines MR-Elements gemäß der Erfindung dargestellt. Bei dieser Ausführungsform ist das MR-Element 68 auf einem Dauermagneten 140 mit Nordpol N und Südpol S aufgebracht. Der Magnet 140 erzeugt auch bei dieser Ausführungsform ein Magnetfeld H, das in Richtung der MR-Streifen 86 und der Vorzugsrichtung des MR-Elements ausgerichtet ist.

Fig. 5b zeigt eine Seitenansicht der in Fig. 5a gezeigten Ausführungsform, wobei deutlich der strukturelle Aufbau und der Aufsatz des MR-Elements 68 auf die Oberfläche des Magneten 140 ersichtlich ist.

Die in Fig. 5 gezeigte Ausführungsform ist im Vergleich mit der in Fig. 4 gezeigten Ausführungsform insgesamt voluminöser, jedoch ist diese Ausführungsform sehr preiswert herzustellen und aufgrund der relativen Unempfindlichkeit des Magneten sehr zuverlässig. Die MR-Streifen der in Fig. 5 gezeigten Ausführungsform weisen eine Dicke d von 180 nm und eine Breite b von 6 µm auf, so dass ein Verhältnis V = d/b = 3·10⁻² realisiert wird

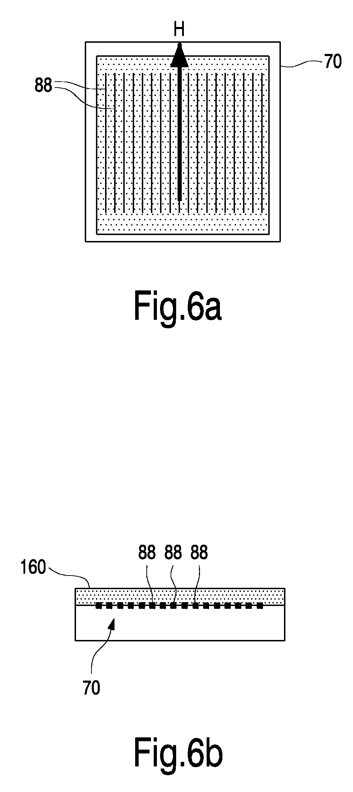

Fig. 6 zeigt eine weitere Ausführungsform eines MR-Elements gemäß der Erfindung. Das MR-Element 70 ist im wesentlichen analog zu den MR-Elementen ausgebildet, wie sie in den Fig. 3 bis 5 gezeigt worden sind, wobei auch bei dieser Ausführungsform MR-Streifen 88 vorgesehen sind, die in Vorzugsrichtung des MR-Elements 70 verlaufen.

Bei dieser Ausführungsform ist, wie insbesondere in Fig. 6b ersichtlich, eine hartmagnetische Schicht 160 auf der Oberfläche des MR-Elements 70 und oberhalb der MR-Streifen 88 aufgebracht. Auch durch diese hartmagnetische Schicht 160 wird ein Magnetfeld H in Richtung der Vorzugsrichtung erzeugt, analog zu den zuvor beschriebenen Ausführungsformen.

Es soll angemerkt werden, dass die gezeigten Ausführungsformen lediglich Beispiele möglicher MR-Elemente und möglicher Vorrichtungen zur Erhöhung der Anisotropiefeldstärke der Sensoreinheiten sind, der Fachmann jedoch weitere Abwandlungen im Rahmen der Erfindung vornehmen kann und insbesondere Teilelemente der gezeigten Ausführungsformen miteinander kombinieren kann.

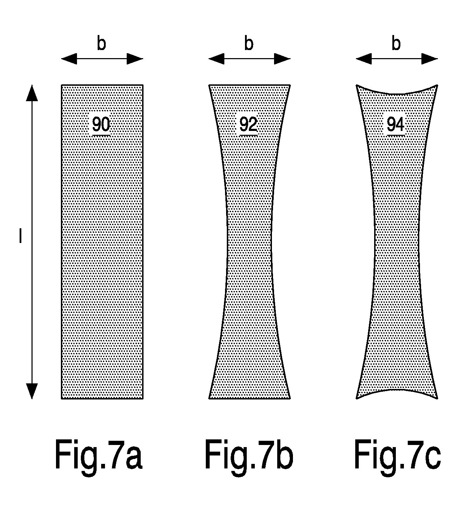

Die MR-Streifen (80, 82, 84, 86, 88, siehe Fig. 3 bis 6) sind in den Fig. 3 bis 6 lediglich schematisch als Linien dargestellt. Die geometrische Ausgestaltung kann jedoch gemäß der Erfindung variiert werden, was insbesondere in Fig. 7 dargestellt ist. Die MR-Streifen der in Fig. 6 gezeigten Ausführungsform weisen eine Dicke d von 160 nm und eine Breite b von 4 µm auf, so dass ein Verhältnis V = d/b = 4·10⁻² realisiert wird.

Fig. 7a zeigt einen MR-Streifen 90, der rechteckig ausgebildet ist, mit einer Länge 1 in Richtung der Vorzugsrichtung und einer Breite b. In Fig. 7b ist eine weitere mögliche Ausgestaltung eines MR-Streifens 92 dargestellt, der hyperboloid ausgestaltet ist, während der in Fig. 7c gezeigte MR-Streifen 94 asteroid ausgebildet ist.

Das Aspektverhältnis von Länge 1 zu Breite b sollte möglichst groß gewählt werden, um eine hohe Anisotropiefeldstärke zu erzielen, und liegt bei den gezeigten Ausführungsformen in einem Bereich von 50 bis 200. Ein besonders bevorzugtes Aspektverhältnis beträgt ca. 100.

Die in der vorangehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### BEZUGSZEICHENLISTE

- 20: Winkelsensor
- 22: Anschluß
- 24: Anschluß
- 26: Anschluß
- 28: Anschluß
- 30: Anschluß
- 32: Anschluß
- 34: Anschluß
- 36: Anschluß
- 40: Sensoreinheit
- 42: Sensoreinheit
- 60: MR-Elemente (Sensoreinheit 40)
- 62: MR-Elemente (Sensoreinheit 42)
- 64: MR-Element
- 66: MR-Element
- 68: MR-Element
- 70: MR-Element
- 80: MR-Streifen
- 82: MR-Streifen
- 84: MR-Streifen
- 86: MR-Streifen
- 88: MR-Streifen
- 90: MR-Streifen
- 92: MR-Streifen
- 94: MR-Streifen
- 100: Spule
- 120: Spule
- 140: Magnet
- 160: Hartmagnetische Schicht
- l: Länge eines MR-Streifens
- b: Breite eines MR-Streifens
- d: Dicke eines MR- Streifens

## Patentansprüche

1. Winkelsensor mit mindestens zwei winkelversetzt zueinander angeordneten anisotropen magnetoresistiven Sensoreinheiten, die anisotrope magnetoresistive Elemente umfassen,
**dadurch gekennzeichnet,**
**dass** der Winkelsensor (20) mindestens eine Vorrichtung (100, 120, 140, 160) zur Erhöhung der Anisotropiefeldstärke der Sensoreinheiten (40, 42) umfaßt.

2. Winkelsensor nach Anspruch 1,
**dadurch gekennzeichnet,**
**dass** die Vorrichtung zur Erhöhung der Anisotropiefeldstärke mindestens eine Spulenanordnung (100, 120) umfaßt.

3. Winkelsensor nach Anspruch 2,
**dadurch gekennzeichnet,**
**dass** die Spulenanordnung mindestens eine externe Spule (100) je magnetoresistivem Element (64) umfaßt, die das magnetoresistive Element (42) im wesentlichen umgibt.

4. Winkelsensor nach Anspruch 2 oder 3,
**dadurch gekennzeichnet,**
**dass** die Spulenanordnung mindestens eine im Layout jedes magnetoresistiven Elements (66) integrierte Dünnschichtspule (120) umfaßt.

5. Winkelsensor nach einem der vorhergehenden Ansprüche,
**dadurch gekennzeichnet,**
**dass** die Vorrichtung zur Erhöhung der Anisotropiefeldstärke mindestens einen Magneten (140) umfaßt.

6. Winkelsensor nach Anspruch 5,
**dadurch gekennzeichnet,**
**dass** der Magnet ein Permanentmagnet (140) ist.

7. Winkelsensor nach einem der vorhergehenden Ansprüche,
**dadurch gekennzeichnet,**
**dass** mindestens ein magnetoresistives Element (70) eine auf ihm aufgebrachte hartmagnetische Schicht (160) umfaßt.

8. Winkelsensor nach einem der vorhergehenden Ansprüche,
**dadurch gekennzeichnet,**
**dass** die mindestens zwei winkelversetzt zueinander angeordneten Sensoreinheiten (40, 42) einen Winkelversatz von 90° aufweisen.

9. Winkelsensor nach einem der vorhergehenden Ansprüche,
dadurch gekennzeichent,
dass die magnetoresistiven Elemente (60, 62, 64, 66, 68, 70) magnetoresistive Schichten, insbesondere magnetoresistive Streifen (80, 82, 84, 86, 88, 90, 92, 94) einer vorgegebenen Länge 1, Breite b und Dichte d umfassen, wobei das Verhältnis V von Dicke d zu Breite b einen Wert V ≥ 4.10⁻³, bevorzugt, V ≥ 1,5·10⁻² aufweist.

10. Winkelsensor nach Anspruch 9,
**dadurch gekennzeichnet,**
**dass** zumindest eine der magnetoresistiven Schichten (80, 82, 84, 86, 88, 90, 92, 94) rechteckig, hyperboloid und/oder asteroid ausgebildet sind.

11. Winkelsensor nach einem der vorhergehenden Ansprüche,
**dadurch gekennzeichnet,**
**dass** zumindest eine der magnetoresistiven Schichten (80, 82, 84, 86, 88, 90, 92, 94) aus einem Material besteht, das aus folgender Gruppe von Materialien ausgewählt ist: NiCo 50:50, NiCo 70:30, CoFeB 72:8:20, NiFe 81:19.

12. Winkelsensor nach einem der vorhergehenden Ansprüche,
**dadurch gekennzeichnet,**
**dass** er ferner ein Mittel zum Applizieren von Ummagnetisierungspulsen umfaßt.

13. Winkelsensor nach Anspruch 12,
**dadurch gekennzeichnet,**
**dass** das Mittel zum Applizieren von Ummagnetisierungspulsen mindestens eine Spulenanordnung (100) umfaßt.

14. Winkelsensor nach einem der vorhergehenden Ansprüche,
**dadurch gekennzeichnet,**
**dass** er ferner nachgeschaltete oder integrierte Signalelektronik umfaßt.

15. Winkelsensor, mit mindestens zwei winkelversetzt zueinander angeordneten anisotropen magnetoresistiven Sensoreinheiten, die anisotrope magnetoresistive Elemente umfassen, insbesondere nach einem der vorhergehenden Ansprüche,
**dadurch gekennzeichnet,**
**dass** die magnetoresistiven Elemente (60, 62, 64, 66, 68, 70) magnetoresistieve Schichten, insbesondere magnetoresistiven Streifen (80, 82, 84, 86, 88, 90, 92, 94) umfassen, die eine im wesentlichen hyperboloide oder asteroide Formgebung aufweisen.

16. Verfahren zum Erhöhen der Anisotropiefeldstärke einer Sensoreinheit (40, 42) eines Winkelsensors (20), die magnetoresistive Elemente (60, 62, 64, 66, 68, 70) umfaßt,
**dadurch gekennzeichnet,**
**dass** ein in einer Vorzugsrichtung der magnetoresistiven Elemente (60, 62, 64, 66, 68, 70) anliegendes magnetisches Stützfeld (H) erzeugt wird.

17. Verfahren nach Anspruch 16,
**dadurch gekennzeichnet,**
**dass** das magnetische Stützfeld (H) permanent oder diskontinuierlich erzeugt wird.

18. Verfahren nach Anspruch 16 oder 17,
**dadurch gekennzeichnet,**
**dass** das Stützfeld (H) durch mindestens eine Spulenanordnung erzeugt wird.

19. Verfahren nach einem der Ansprüche 16 oder 17,
**dadurch gekennzeichnet,**
**dass** das Stützfeld (H) durch einen Magneten (140) erzeugt wird.

20. Verfahren nach einem der Ansprüche 16 oder 17,
**dadurch gekennzeichnet,**
**dass** das Stützfeld (H) durch eine hartmagnetische Schicht (160) erzeugt wird, die auf mindestens einem der magnetoresistiven Elemente (60, 62, 64, 66, 68, 70) aufgebracht ist.

21. Verfahren zum Erhöhen der Anisotropiefeldstärke einer Sensoreinheit (40, 42) eines Winkelsensor (20), die magnetoresistive Elemente (60, 62, 64, 66, 68, 70) umfaßt, insbesondere ein Verfahren nach einem der Ansprüche 16 bis 20,
**dadurch gekennzeichnet,**
**dass** die magnetoresistiven Elemente (60, 62, 64, 66, 68, 70) aus magnetoresistiven Schichten, insbesondere magnetoresistiven Streifen (80, 82, 84, 86, 88, 90, 92, 94) aufgebaut werden, wobei den magnetoresistiven Schichten eine im wesentlichen hyperboloide oder asteroide Form gegeben wird.
